# EUROPÄISCHE PATENTANMELDUNG

(11) **EP 3 819 550 A1**
(43) Veröffentlichungstag der Anmeldung: **12.05.2021**
(21) Anmeldenummer: 19207460.7
(22) Anmeldetag: 06.11.2019
(51) Int. Cl.: F24D 3/16

(54) **STRAHLFLÄCHENAUFBAU**

(71) Anmelder: Zehnder Group International AG, 5722 Gränichen (CH)
(72) Erfinder: Die Erfindernennung liegt noch nicht vor
(74) Vertreter: Rentsch Partner AG

(57) **Zusammenfassung**

Die Erfindung betrifft einen Strahlflächenaufbau, insbesondere Deckenstrahlflächenaufbau, mit Rohren (7) und/oder einem Rohrregister zur Führung eines Heiz- und/oder Kühlmediums, mit einer eine Strahlfläche (5) bereitstellenden Strahlplatte (2) und mit einer Schürze (3, 4), wobei die Schürze (3, 4) der Strahlplatte (2) derart seitlich zugeordnet ist, dass sie die Konvektion von Luft über einen Seitenrand der Strahlplatte (2) hinweg begrenzt, wobei die Schürze (3, 4) strahlplattenseitig wenigstens eine Spiegelfläche (16, 17) aufweist. Ferner betrifft die Erfindung eine Deckenstrahlheizung mit einem erfindungsgemäßen Strahlflächenaufbau.

## Beschreibung

Die Erfindung betrifft einen Strahlflächenaufbau, insbesondere Deckenstrahlflächenaufbau, mit Rohren und/oder einem Rohrregister zur Führung eines Heiz- und/oder Kühlmediums, mit einer eine Strahlfläche bereitstellenden Strahlplatte und mit einer Schürze, wobei die Schürze der Strahlplatte derart seitlich zugeordnet ist, dass sie die Konvektion von Luft über einen Seitenrand der Strahlplatte hinweg begrenzt.

Derartige Strahlflächenaufbauten sind aus dem Stand der Technik bekannt. Dabei dient die Kombination aus Strahlplatte und Schürze dem Grunde nach dem Zweck, die unerwünschte Konvektion von erwärmter Luft über die Seitenränder der Strahlplatte hinweg zu verhindern. Die seitliche Konvektion führt bei Ausführungen ohne Schürzen zu einer Minderung der Wärmeleistung.

Eine solche Ausführung ist beispielsweise aus der FR 2 085 165 A1 bekannt. Der dortige Deckenstrahlflächenaufbau weist eine Strahlplatte und eine Schürze auf. Die Schürze bildet mit dem Seitenrand der Strahlplatte einen Stauraum, welcher der Aufnahme von warmer Luft dient, die über die Seitenränder der Strahlplatte strömt.

Allerdings kann auch diese Ausführungsform die seitliche Konvektion nicht vollends verhindern, da der Stauraum nach gegebener Heizdauer vollständig gefüllt ist. Bei gefülltem Stauraum strömt die erwärmte Luft, die in dem Stauraum keinen Platz mehr hat, über die Seitenränder der Schürze. Mit anderen Worten läuft der Stauraum über.

Es sind in diesem Zusammenhang weitere Strahlplattenaufbauten bekannt geworden, die diesen Nachteil beheben wollten. So ist beispielsweise aus der EP 2 206 970 A1 eine Stauraum-Kaskade offenbart. Zur Erhöhung des aufnehmbaren Volumens an erwärmter Luft sind in seitlicher Richtung zwei sich aneinander anschließende Stauräume ausgebildet. Der erste Stauraum befindet sich zwischen nach unten gezogenen Seitenrändern der Strahlenplatte. Der zweite Stauraum ist zwischen der Außenseite des Seitenrandes und einer dem Seitenrand zugeordneten Schürze gebildet. Ein aus dem ersten Stauraum überfließendes Volumen wird von dem zweiten Stauraum aufgefangen. Ist der zweite Stauraum vollständig gefüllt, strömt die weitere erwärmte Luft über die Ränder der Schürze.

Auch mit diesem Aufbau kann die seitliche Konvektion folglich nicht vollständig verhindert werden. Ferner hat diese Ausgestaltung den Nachteil, dass ein beträchtlicher Teil der Wärmestrahlung ungenutzt bleibt, da sie über den vergleichsweise großflächigen Seitenrand der Strahlplatte zur Seite abgegeben wird.

Bei bestehenden Strahlflächenaufbauten geht daher ein Leistungsgewinn durch Minderung der seitlichen Konvektion gleichzeitig in unerwünschter Weise mit einem Leistungsverlust durch Verschlechterung der Strahlungseigenschaften einher.

Es besteht folglich ein vitales Interesse daran, die Leistung von Deckenstrahlflächenaufbauten, insbesondere von Deckenstrahlheizkörpern, zu verbessern.

Der Erfindung liegt damit die **Aufgabe** zu Grunde, die Leistung eines Strahlflächenaufbaus insgesamt zu verbessern.

Zur **Lösung** der Aufgabe schlägt die Erfindung einen gattungsgemäßen Strahlflächenaufbau vor, bei dem die Schürze strahlplattenseitig wenigstens eine Spiegelfläche aufweist.

Durch die erfindungsgemäße Ausgestaltung wird die Strahlungsleistung der Schürze und damit auch die des Strahlflächenaufbaus insgesamt verbessert. Durch die Spiegelfläche wird die von der Strahlplatte auf die Schürze geworfene Wärmestrahlung in Richtung des zu temperierenden Raums reflektiert. Ferner wird ein vergleichsweise großer Anteil der von der erwärmten Luft abgestrahlten und ungerichteten Wärmestrahlung in Richtung des zu temperierenden Raums reflektiert. Die Ausnutzung der Wärmestrahlung wird damit in vorteilhafter Weise gegenüber den aus dem Stand der Technik bekannten Ausgestaltungen verbessert. In Abkehr von der etablierten Lehre des Standes der Technik durchbricht die Anmelderin damit die unvorteilhafte Korrelation zwischen Konvektionsvermeidung und Strahlungsnutzung. Durch die erfindungsgemäße Ausgestaltung kann auch die über die Seitenränder der Strahlplatte in seitlicher Richtung abgegebene Wärmestrahlung nahezu vollständig in Richtung des zu temperierenden Raums reflektiert und damit für die Temperierungsleistung des Strahlflächenaufbaus nutzbar gemacht werden. Je größer die seitliche Abstrahlung der Seitenflächen der Strahlplatte ist, desto größer wird auch die Strahlungsleistung der Spiegelfläche der Schürze. Es kann somit erstmals ein Strahlflächenaufbau angegeben werden, der durch den vorbeschriebenen unerwarteten synergetischen Effekt sowohl hinsichtlich Konvektionsvermeidung als auch hinsichtlich Strahlungsnutzung optimierbar ist.

In bestimmungsgemäßer Einbaulage des erfindungsgemäßen Strahlflächenaufbaus sind die Strahlfläche der Strahlplatte und die Spiegelfläche dem zu temperierenden Raum zugewandt. Vorzugsweise ist die Spiegelfläche dabei der Strahlplatte zugewandt. Hierdurch kann von der Strahlplatte in Richtung der Schürze abgegebene Wärmestrahlung in Richtung des zu temperierenden Raums reflektiert werden.

Erfindungsgemäß ist die Schürze der Strahlplatte derart seitlich zugeordnet, dass sie die Konvektion von Luft über einen Seitenrand der Strahlplatte hinweg begrenzt. Dies dient dem Zweck, die Temperierungsleistung des Strahlflächenaufbaus durch Hinderung der seitlichen Konvektion zu verbessern. Vorzugsweise ist die Schürze der Strahlplatte dabei derart zugeordnet, dass zwischen Strahlplatte und Spiegelfläche ein Stauraum ausgebildet ist. Es ist ferner bevorzugt, beidseits der Strahlplatte eine Schürze vorzusehen, die die Konvektion an beiden Seiten der Strahlplatte begrenzt. In diesem Fall kann ein Stauraum zwischen Spiegelflächen gegenüberliegend angeordneter Schürzen gebildet sein. Die Schürzen können als separate Bauteile ausgebildet sein, die jeweils einer gegenüberliegenden Seite der Strahlplatte zugeordnet sind. Alternativ können die beiden seitlichen Schürzen einstückig nach Art einer Haube ausgebildet sein. In diesem Fall sind die beiden Schürzen über eine Verbindungsplatte miteinander verbunden.

Erfindungsgemäß weist die Schürze eine Spiegelfläche auf. Es ist dabei nicht erforderlich, dass die Schürze vollflächig verspiegelt ist. Eine teilweise Verspiegelung ist ausreichend, um die Strahlungsleistung der Schürze zu verbessern. Gemäß einem bevorzugten Merkmal der Erfindung ist es jedoch vorgesehen, dass ein überwiegender Teil oder sogar die gesamte der Strahlplatte zugewandte Fläche der Schürze als Spiegelfläche ausgebildet ist. Hierdurch wird der größtmögliche Effekt hinsichtlich der Verbesserung der Strahlungsleistung erzielt.

Es ist gemäß einem bevorzugten Merkmal der Erfindung vorgesehen, dass die Spiegelfläche wenigstens abschnittsweise sowohl im sichtbaren als auch im infraroten Bereich des elektromagnetischen Spektrums reflektierend ausgebildet ist. In diesem Fall ist vorgesehen, dass die Schürze, insbesondere strahlplattenseitig, mit einem Metall beschichtet und/oder wenigstens abschnittsweise aus einem Metall gebildet ist. Der Einsatz eines Metalls zur Ausbildung einer Spiegelfläche hat den Vorteil, dass es mit vergleichsweise einfachen technischen Mitteln machbar und damit vergleichsweise wirtschaftlich ist. Solchermaßen hergestellte Spiegel reflektieren zumindest teilweise im infraroten Bereich (Wärmestrahlung) des elektromagnetischen Spektrums. Als positiver Nebeneffekt der mit metallischen Spiegeln nicht vermeidbaren Reflektion im sichtbaren Bereich (Licht) des elektromagnetischen Spektrums tragen die Schürzen zur passiven Beleuchtung des Raumes bei.

Die Ausbildung der Spiegelfläche mittels einer metallischen Beschichtung hat den Vorteil, dass die Schürze insgesamt nicht aus Metall hergestellt sein muss. Vielmehr kann sie aus einem anderen Material hergestellt, welches beispielsweise über eine im Vergleich mit einem Metall geringere Wärmeleitfähigkeit verfügt. Hierdurch können thermisch bedingte Verformungen der Schürze verhindert werden.

Gemäß einem bevorzugten Merkmal der Erfindung ist es vorgesehen, dass die mit einem Metall beschichtete und/oder aus einem Metall gebildete Spiegelfläche poliert ist. Hierdurch wird die Oberfläche homogenisiert, was zu einer Verbesserung der Reflexionseigenschaften führt.

Gemäß einer bevorzugten oder alternativen Ausgestaltung der Erfindung ist es vorgesehen, dass die Spiegelfläche wenigstens abschnittsweise nur im infraroten Bereich des elektromagnetischen Spektrums reflektierend ausgebildet ist. Dies hat den Vorteil, dass nur die für die Heizleistung erforderliche Wärmestrahlung reflektiert wird. Sichtbares Licht wird von einer solchen Spiegelfläche hingegen transmittiert. Hierdurch werden unerwünschte Lichteffekte, wie insbesondere der Brennglaseffekt, vermieden. Insbesondere bei der Bestückung von Industriehallen mit einer Vielzahl von Strahlplattenaufbauten kann dies bei ungünstigem Lichteinfall eine sicherheitsrelevante Bedeutung haben.

Dem Grunde nach ist dies auch mit einer teildurchlässigen Metallbeschichtung zu erreichen. Zur Herstellung einer lediglich Wärmestrahlung reflektierenden Spiegelfläche ist es jedoch bevorzugt, die bestimmungsgemäße Spiegelfläche dichroitisch zu verspiegeln. Dichroitische Spiegel sind Strahlungsfilter, die selektiv nur einen Teil des Spektrums reflektieren. Der Rest kann den Spiegel passieren. Die Wirkungsweise dichroitischer Spiegel beruht auf der Interferenz von Lichtwellen. Diese wird durch das Aufbringen von mehreren dünnen nichtmetallischen Schichten auf einen Glas- oder Kunststoffträger, in diesem Fall die Schürze, erreicht. Da die Selektion der reflektierten Wellenlängen nicht auf Absorption beruht, können dichroitische Spiegel auch in vergleichsweise hochenergetischen Strahlungswegen eingesetzt werden. Im vorliegenden bevorzugten Fall ist die Spiegelfläche als dichroitischer Wärmespiegel ausgebildet. Dabei wird lediglich der infrarote Anteil der einfallenden Strahlung reflektiert. Der sichtbare Anteil der Strahlung kann hingegen die Spiegelfläche passieren.

Gemäß einem bevorzugten Merkmal der Erfindung ist vorgesehen, dass die Strahlplatte auf einer der Strahlfläche abgewandten Seite eine thermische und/oder eine akustische Isolierung trägt. Dies dient dem Zweck, die Abstrahlung von Wärme in Richtung Decke des zu temperierenden Raums zu verhindern. Ferner kann hierdurch eine Wärmeübertragung durch Wärmeleitung auf die Schürze verhindert werden. Dies ist insofern von Vorteil, als dass dadurch thermisch bedingte Verformungen der Schürze verhindert werden können. Im Falle der Realisierung einer akustischen Isolierung kann der Strahlflächenaufbau gleichzeitig als akustisches Dämpfungselement eingesetzt werden. Eine separate Dämpfung wird hierdurch überflüssig. Zum Zwecke der Schalldämmung ist es vorteilhaft, die Strahlplatte, insbesondere im Bereich der Strahlfläche, gelocht auszubilden.

Gemäß einem bevorzugten Merkmal der Erfindung ist vorgesehen, dass die Schürze auf einer der verspiegelten Fläche abgewandten Seite eine thermische und/oder eine akustische Isolierung trägt. Dies dient dem Zweck, die Abstrahlung von Wärme in Richtung Decke des zu temperierenden Raums zu verhindern. Ferner kann hierdurch eine Wärmeübertragung durch Wärmeleitung auf Befestigungsmittel, mit denen die Schürze an der Strahlplatte befestigt ist verhindert werden. Dies ist insofern von Vorteil, als dass dadurch thermisch bedingte Verformungen der Schürze verhindert werden können. Im Falle der Realisierung einer akustischen Isolierung kann der Strahlflächenaufbau gleichzeitig als akustisches Dämpfungselement eingesetzt werden. Eine separate Dämpfung wird hierdurch überflüssig. Zum Zwecke der Schalldämmung ist es vorteilhaft, die Schürze gelocht auszubilden.

Zusätzlich oder alternativ kann vorgesehen sein, dass die Schürze auf der der Strahlplatte zugewandten Seite eine Schicht aus einem thermisch und/oder akustisch isolierenden Material aufweist, wobei die isolierende Schicht die Spiegelfläche trägt. In diesem Fall wird die Wärmeübertragung auf die Schürze in Folge von Wärmestrahlung und Konvektion verhindert. Dies ist insofern von Vorteil, als dass dadurch thermisch bedingte Verformungen der Schürze verhindert werden können. Im Falle der Realisierung einer akustischen Isolierung kann der Strahlflächenaufbau gleichzeitig als akustisches Dämpfungselement eingesetzt werden. Eine separate Dämpfung wird hierdurch überflüssig.

Gemäß einem bevorzugten Merkmal der Erfindung ist vorgesehen, dass die Spiegelfläche in einem Winkel zu der Strahlplatte ausgerichtet ist. Hierdurch lässt sich die von der Strahlplatte abgestrahlte Wärmestrahlung gezielt in Richtung des zu temperierenden Raums reflektieren. Es ist dabei bevorzugt, dass die Spiegelfläche in einem Winkel zwischen 100° und 170°, vorzugsweise zwischen 130° und 150°, zu der Strahlfläche der Strahlplatte ausgerichtet ist. Hierdurch wirkt die Spiegelfläche der Schürze einerseits der Konvektion über die Seitenränder der Strahlplatte entgegen, indem sie einen Staurand bildet. Andererseits wird ein vergleichsweise großer Anteil der von der Strahlplatte in Richtung der Spiegelfläche abgegebenen Wärmestrahlung in diesem Winkelbereich in Richtung des zu temperierenden Raums reflektiert.

Gemäß einem bevorzugten Merkmal der Erfindung ist die Schürze derart angeordnet, dass deren in Einbaulage zum Raum ausgerichtete Kante weiter in den Raum hineinragt, als die Strahlfläche der Strahlplatte. Hierdurch wird der Konvektion in vorteilhafter Weise stärker entgegengewirkt und ein größerer Anteil der von der Strahlplatte abgegebenen Wärmestrahlung kann in Richtung des zu temperierenden Raumes reflektiert werden.

Die Erfindung betrifft ferner eine Deckenstrahlheizung mit einem erfindungsgemäßen Strahlflächenaufbau.

In dieser Ausgestaltung weist die Strahlfläche der Strahlplatte wenigstens teilweise in Einbaulage nach unten. Ebenso ist die Schürze derart ausgerichtet, dass sie sich in Einbaulage wenigstens teilweise nach unten erstreckt.

Es ist dabei bevorzugt, dass die in Einbaulage untere Kante der Schürze weiter unten positioniert ist, als der in Einbaulage unterste Punkt der Strahlplatte.

Eine erfindungsgemäße Deckenstrahlheizung kann aus einer Mehrzahl von Strahlflächenaufbauten modulartig zusammengesetzt sein. Eine Verbindung der Strahlflächenaufbauten in Längsrichtung und/oder in Breitenrichtung ist möglich. Vorzugsweise kann sich hierfür geeigneter Verbindungsmittel, wie Schrauben, Blenden, Rohrverbinder und dergleichen bedient werden. Es ist daher möglich, vergleichsweise kleine Deckenflächen, ab 5 m², mit der erfindungsgemäßen Deckenstrahlheizung zu bestücken und den anliegenden Raum zu beheizen.

Ferner ist es durch die modulartige Ausgestaltung der Deckenstrahlheizung möglich, vergleichsweise große Messe- oder Industriehallen zu beheizen, die Deckenflächen von über 1000 m² zur Bestückung aufweisen. In dieser Ausgestaltung handelt es sich um eine Großflächendeckenstrahlheizung.

Die Erfindung wird nachfolgend anhand eines Ausführungsbeispiels verdeutlicht. Dabei zeigt:

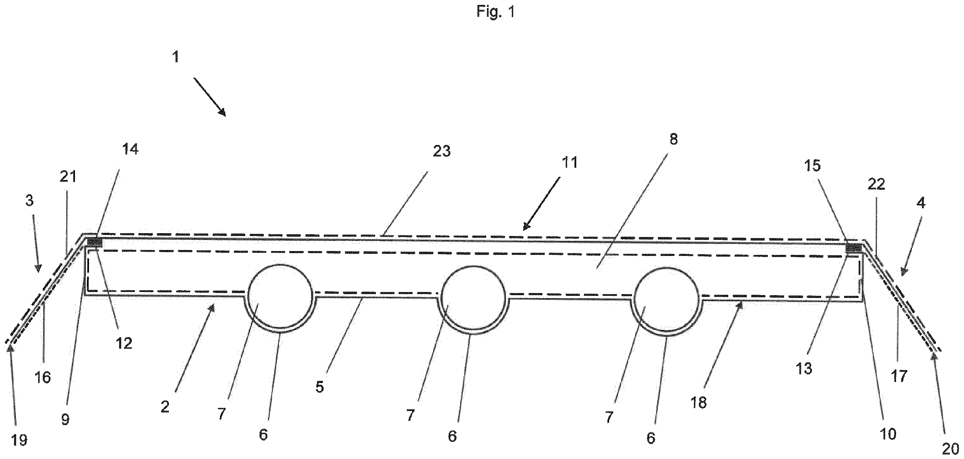

- Fig.1: einen erfindungsgemäßen Deckenstrahlflächenaufbau in schematischer Darstellung im Querschnitt.

Figur 1 zeigt einen erfindungsgemäßen Deckenstrahlflächenaufbau 1 in Einbaulage. Der Deckenstrahlflächenaufbau 1 weist eine Strahlplatte 2 und zwei beidseits der Strahlplatte 2 angeordnete Schürzen 3, 4 auf.

Der Deckenstrahlflächenaufbau ist mit nicht abgebildeten Befestigungsmitteln an der Decke des zu beheizenden Raums aufgehängt.

Die Strahlplatte 2 ist vorliegend einstückig aus einem Stahlblech gebildet. Die Strahlplatte 2 weist eine dem zu temperierenden Raum zugewandte Strahlfläche 5 auf. Die Strahlfläche weist im Querschnitt halbkreisförmig ausgebildete Rohraufnahmen 6 auf. Die Rohraufnahmen 6 sind in die Strahlplatte 2 eingeprägt. In den Rohraufnahmen 6 sind Rohre 7 eines Rohrregisters angeordnet. Die Rohre 7 dienen vorliegend der Führung eines Heizmediums, insbesondere Wasser.

Die Strahlplatte 2 trägt auf ihrer der Strahlfläche 5 abgewandten Seite eine thermische Isolierung. Die thermische Isolierung ist vorliegend als Isolationskörper 8 ausgebildet, der sich auf der Strahlplatte 2 abstützt. Der Isolationskörper 8 verhindert die Abgabe von Wärme in Richtung der Decke des zu beheizenden Raums.

Die Strahlplatte 2 weist im Querschnitt zwei einander gegenüberliegend verlaufende Seitenflächen 9, 10 auf. Die Seitenflächen 9, 10 sind durch Umbiegen der Strahlplatte 2 während des Formungsprozesses gebildet.

Die Schürzen 3, 4 sind vorliegend einstückig nach Art einer Haube ausgebildet. Zu diesem Zweck sind sie miteinander über die Verbindungsplatte 11 miteinander verbunden. Die Verbindungsplatte 11 stützt sich auf der Strahlplatte 2 ab. Die Strahlplatte 2 stellt hierfür Auflageabschnitte 12, 13 bereit. Zur Vermeidung einer Wärmeleitung sind zwischen den Auflageabschnitten 12, 13 der Strahlplatte 2 und der Verbindungsplatte 11 thermische Isolierungselemente 14, 15 angeordnet.

Jede Schürze 3, 4 weist auf Ihrer der Strahlplatte 2, insbesondere der jeweiligen Seitenwand 9, 10, zugewandten Seite eine vollflächige Spiegelfläche 16, 17 auf. Auf die Spiegelfläche 16, 17 einfallende Wärmestrahlung kann hierdurch in Richtung des zu beheizenden Raums reflektiert werden. Mit Bezug auf die vorliegend abgebildete Einbaulage wird die Wärmestrahlung von der Spiegelfläche 16, 17 zum überwiegenden Teil nach unten reflektiert. Die Heizleistung des Strahlflächenaufbaus 1 ist damit insgesamt verbessert.

Die Schürzen 3, 4 sind vorliegend ebenfalls aus Stahlblech gebildet. Die Spiegelflächen 16, 17 sind durch Beschichtung des Blechs mit einem Metall, vorzugsweise Silber und/oder Aluminium, beschichtet. Hierdurch wird eine Spiegelfläche 16, 17 realisiert, die sowohl im infraroten als auch im sichtbaren Bereich des elektromagnetischen Spektrums reflektierend ausgebildet ist.

Jede Spiegelfläche 16, 17 der Schürzen 3, 4 erstreckt sich dabei im Querschnitt in einem Winkel von 130° zu wenigstens einem in Einbaulage horizontal verlaufenden Abschnitt 18 der Strahlfläche 5. Hierdurch lässt sich ein vergleichsweise großer Strahlungsanteil in die gewünschte Richtung in Einbaulage nach unten reflektieren. Die Heizleistung des Strahlflächenaufbaus 1 ist damit insgesamt verbessert.

Es ist ferner zu erkennen, dass die mit Bezug auf die abgebildete Einbaulage untere Kante 19, 20 der Schürzen 3, 4 unterhalb des untersten Punkts der Strahlplatte 2 enden. Hierdurch ist zwischen den Schürzen 3, 4 ein Stauraum für erwärmte Luft gebildet. Über die Seitenränder der Strahlplatte 2 entweichende erwärmte Luft wird somit in vorteilhafter Weise aufgefangen. Von der erwärmten Luft in Richtung der Schürzen 3, 4 abgestrahlte Wärmestrahlung kann damit ebenfalls in Richtung des zu beheizenden Raums reflektiert werden. Die Heizleistung des Strahlflächenaufbaus 1 ist damit insgesamt verbessert.

Jede Schürze 3, 4 trägt auf ihrer der Strahlplatte 2 abgewandten Seite eine thermische Isolierung. Die thermische Isolierung ist jeweils als Isolationsschicht 21, 22 ausgebildet. Die Isolierung stellt sicher, dass seitens der Schürzen 3, 4 keine Wärme in Richtung der Decke des zu beheizenden Raums abgegeben wird.

Ebenso trägt die Verbindungsplatte 11 auf ihrer der Strahlplatte 2 abgewandten Seite eine thermische Isolierung. Die thermische Isolierung ist als Isolationsschicht 23 ausgebildet. Die Isolierung stellt sicher, dass seitens der Verbindungsplatte 11 keine Wärme in Richtung der Decke des zu beheizenden Raums abgegeben wird.

Insgesamt ist damit ein Deckenstrahlflächenaufbau 1 angegeben, der mit Bezug auf die erreichbare Heizleistung durch Nutzung eines synergetischen Effekts zwischen Schürze 3,4 und Strahlplatte 2 verbessert ist.

### Bezugszeichen

- 1: Deckenstrahlflächenaufbau
- 2: Strahlplatte
- 3: Schürze
- 4: Schürze
- 5: Strahlfläche
- 6: Rohraufnahme
- 7: Rohr
- 8: Isolationskörper
- 9: Seitenwand
- 10: Seitenwand
- 11: Verbindungsplatte
- 12: Auflageabschnitt
- 13: Auflageabschnitt
- 14: Isolierungselement
- 15: Isolierungselement
- 16: Spiegelfläche
- 17: Spiegelfläche
- 18: horizontaler Abschnitt
- 19: untere Kante
- 20: untere Kante
- 21: Isolationsschicht
- 22: Isolationsschicht
- 23: Isolationsschicht

## Patentansprüche

1. Strahlflächenaufbau, insbesondere Deckenstrahlflächenaufbau, mit Rohren (7) und/oder einem Rohrregister zur Führung eines Heiz- und/oder Kühlmediums, mit einer eine Strahlfläche (5) bereitstellenden Strahlplatte (2) und mit einer Schürze (3, 4), wobei die Schürze (3, 4) der Strahlplatte (2) derart seitlich zugeordnet ist, dass sie die Konvektion von Luft über einen Seitenrand der Strahlplatte (2) hinweg begrenzt, **dadurch gekennzeichnet, dass** die Schürze (3, 4) strahlplattenseitig wenigstens eine Spiegelfläche (16, 17) aufweist.

2. Strahlflächenaufbau nach Anspruch 1, **dadurch gekennzeichnet, dass** sich die Spiegelfläche (16, 17) über die gesamte strahlplattenseitige Fläche der Schürze (3, 4) erstreckt.

3. Strahlflächenaufbau nach Anspruch 1 oder 2, **dadurch gekennzeichnet, dass** die Spiegelfläche (16, 17) sowohl im sichtbaren als auch im infraroten Bereich des elektromagnetischen Spektrums reflektierend ausgebildet ist.

4. Strahlflächenaufbau nach Anspruch 3, **dadurch gekennzeichnet, dass** die Schürze (3, 4) zur Ausbildung der Spiegelfläche (16, 17) mit einem Metall beschichtet ist.

5. Strahlflächenaufbau nach einem der Ansprüche 3 oder 4, **dadurch gekennzeichnet, dass** die Schürze (3, 4) zur Ausbildung der Spiegelfläche (16, 17) wenigstens bereichsweise aus einem metallischen Material gebildet ist.

6. Strahlflächenaufbau nach einem der Ansprüche 4 oder 5, **dadurch gekennzeichnet, dass** das metallische Material zur Ausbildung der Spiegelfläche (16, 17) poliert ist.

7. Strahlflächenaufbau nach Anspruch 1 oder 2 **dadurch gekennzeichnet, dass** die Spiegelfläche (16, 17) nur im infraroten Bereich des elektromagnetischen Spektrums reflektierend ausgebildet ist.

8. Strahlflächenaufbau nach Anspruch 7, **dadurch gekennzeichnet, dass** die Schürze (3, 4) zur Ausbildung der Spiegelfläche (16, 17) dichroitisch verspiegelt ist.

9. Strahlflächenaufbau nach Anspruch 8, **dadurch gekennzeichnet, dass** die Spiegelfläche (16, 17) als dichroitischer Wärmespiegel ausgebildet ist.

10. Strahlflächenaufbau nach einem der Ansprüche 1 bis 9, **dadurch gekennzeichnet, dass** die Strahlplatte (2) auf einer der Strahlfläche (5) abgewandten Seite eine thermische und/oder eine akustische Isolierung (8) aufweist.

11. Strahlflächenaufbau nach einem der Ansprüche 1 bis 10, **dadurch gekennzeichnet, dass** die Schürze (3, 4) auf einer der verspiegelten Fläche (16, 17) abgewandten Seite eine thermische und/oder eine akustische Isolierung (21, 22) trägt.

12. Strahlflächenaufbau nach einem der Ansprüche 1 bis 11, **dadurch gekennzeichnet, dass** die Schürze (3, 4) auf der der Strahlplatte (2) zugewandten Seite eine Schicht aus einem thermisch und/oder akustisch isolierenden Material aufweist, wobei die isolierende Schicht die Spiegelfläche (16, 17) trägt.

13. Strahlflächenaufbau nach einem der Ansprüche 1 bis 12, **dadurch gekennzeichnet, dass** die Spiegelfläche (16, 17) in einem Winkel zwischen 100° und 170° zu der Strahlfläche (5) der Strahlplatte (2) ausgerichtet ist.

14. Strahlflächenaufbau nach Anspruch 13, **dadurch gekennzeichnet, dass** die Spiegelfläche (16, 17) in einem Winkel zwischen 130° und 150° zu der Strahlfläche (5) der Strahlplatte (2) ausgerichtet ist.

15. Deckenstrahlheizung mit einem Strahlflächenaufbau (1) nach einem der Ansprüche 1 bis 14.
